# FASCICULE DE BREVET EUROPEEN

(11) **EP 1 884 033 B1**
(45) Date de publication et mention de la délivrance du brevet: **17.06.2009**
(21) Numéro de dépôt: 06743359.9
(22) Date de dépôt: 20.04.2006
(51) Int. Cl.: H04B 3/54

(54) **SYSTEME DE COMMUNICATION COMPRENANT UN RESEAU DE COMMUNICATION PAR COURANT PORTEUR ET AU MOINS UN AUTRE RESEAU DE COMMUNICATION, NOEUD CORRESPONDANT**
KOMMUNIKATIONSSYSTEM MIT EINEM STROMLEITUNGS-KOMMUNIKATIONSNETZ UND MINDESTENS EIN WEITERES KOMMUNIKATIONSNETZ, ENTSPRECHENDER KNOTEN
COMMUNICATION SYSTEM COMPRISING A POWERLINE COMMUNICATION NETWORK AND AT LEAST ONE OTHER COMMUNICATION NETWORK, CORRESPONDING NODE

(30) Priorité: 23.05.2005 FR 0505160
(43) Date de publication de la demande: 06.02.2008
(73) Titulaire: Wirecom Technologies, 45100 Orleans (FR)
(72) Inventeur: JUILLOT, Stéphane, F-45100 Orleans (FR); ALLARD, Thierry, F-45000 Orleans (FR)
(74) Mandataire: Guéné, Patrick Lucien Juan Joseph
(86) Numéro de dépôt international: PCT/EP2006/061691
(87) Numéro de publication internationale: WO 2006/125701

(56) Documents cités:
- WO-A-01/37535
- SOUCEK S ET AL: "Effect of delay jitter on quality of control in EIA-952-based networks" IECON-2003. PROCEEDINGS OF THE 29TH. ANNUAL CONFERENCE OF THE IEEE INDUSTRIAL ELECTRONICS SOCIETY. ROANOKE, VA, NOV. 2 - 6, 2003, ANNUAL CONFERENCE OF THE IEEE INDUSTRIAL ELECTRONICS SOCIETY, NEW YORK, NY : IEEE, US, vol. VOL. 3 OF 3. CONF. 29, 2 novembre 2003 (2003-11-02), pages 1431-1436, XP010691100 ISBN: 0-7803-7906-3

## Description

### 1. Domaine de l'invention

Le domaine de l'invention est celui des systèmes comprenant des réseaux de communication par courant porteur, aussi appelés réseaux CPL (pour « Courant Porteur en Ligne ») ou PLC (pour « PowerLine Carrier » en anglais), qui permettent d'utiliser le câblage d'un réseau électrique pour transmettre des données informatiques.

Classiquement, chaque noeud est un automate qui prend en charge un ou plusieurs équipements qu'il contrôle par le biais d'entrées/sorties logiques ou analogiques. Tous les noeuds associés sur un même réseau communiquent par courant porteur bas débit, en utilisant par exemple le protocole LonTalk (marque déposée), ou par courant porteur haut débit, en utilisant par exemple un protocole encapsulé dans TCP/IP. Les noeuds sont constitués d'un ensemble de cartes électroniques interconnectées.

Plus précisément, l'invention concerne un système de communication comprenant un premier réseau de communication par courant porteur relié à au moins un second réseau de communication. En d'autre termes, l'invention concerne une technique permettant d'ouvrir vers l'extérieur le premier réseau de communication par courant porteur.

L'invention a de nombreuses applications, telles que par exemple : la gestion technique centralisée, la gestion technique de bâtiments, le contrôle/commande d'application industrielles et tertiaires, l'immotique et la domotique.

Plus généralement, elle peut s'appliquer dans tous les cas où un ou plusieurs services relatifs au premier réseau de communication par courant porteur doivent être accessibles depuis un terminal connecté au second réseau de communication (par exemple le réseau RTC ou un réseau Ethernet).

Ces services sont par exemple (liste non exhaustive) : un service de configuration des noeuds, un service de configuration du premier réseau de communication par courant porteur, un service d'accès à des données stockées dans les noeuds, un service d'archivage de données dans les noeuds et un service de synchronisation des noeuds.

### 2. Art antérieur

Traditionnellement, un système de contrôle/commande comprend un premier réseau de communication par courant porteur (par exemple un bus de terrain), via lequel peuvent communiquer entre eux une pluralité de noeuds courant porteur (automates).

Pour la configuration des automates, leur gestion sur le bus, ou encore l'accès aux données, un terminal spécifique, appelé ci-après terminal de contrôle/commande, est aujourd'hui indispensable. Ce terminal de contrôle/commande peut être un appareil portable vendu par le constructeur des automates et pouvant s'interfacer sur le même bus de terrain ou directement sur les automates. Cela peut être également un ordinateur muni d'un logiciel vendu par le constructeur des automates, qui s'interface sur le bus de terrain ou directement sur les automates et qui peut nécessiter pour cela une carte d'interface spécifique.

En ce qui concerne l'ouverture du premier réseau de communication par courant porteur vers l'extérieur, de façon que le terminal de contrôle/commande puisse être connecté au second réseau (et non plus au premier réseau), plusieurs solutions peuvent être envisagées :
- une passerelle matérielle peut être mise en place pour faire l'interface vers un second réseau (support physique différent et/ou autre protocole de communication différent). Cette passerelle matérielle est alors spécifique au constructeurs des automates ; Le document de brevet WO 01/37 535 A1 décrit une telle solution, dans laquelle il faut utiliser une passerelle matérielle ("loadcenter" 12, figure 4)
- une passerelle logicielle, mise en oeuvre sous la forme d'un ordinateur exécutant un logiciel spécifique, peut également être utilisée pour faire l'interface vers un second réseau. Dans ce cas, l'ordinateur est connecté sur le même bus de terrain que les automates, via une carte spécifique dépendant du bus de terrain et du protocole choisis. Le logiciel spécifique peut ou non proposer des interfaces standards pour permettre l'accès aux données des automates depuis le terminal de contrôle/commande connecté au second réseau. Un des standards de plus en plus utilisé est l'interface OPC (pour « OLE for Process Control ») qui définit un standard d'échange de données dans les environnements Windows (marque déposée)).

Un premier inconvénient de la technique actuelle précitée est que l'ouverture du premier réseau de communication par courant porteur vers le monde extérieur passe par l'ajout de matériels et logiciels propriétaires, que la passerelle soit de type matérielle ou logicielle.

Un autre inconvénient de la technique actuelle précitée est que l'extension du premier réseau de communication par courant porteur (ajout d'un ou plusieurs noeuds) nécessite une reconfiguration du logiciel et/ou du matériel de la passerelle, lorsque le premier réseau n'est pas en limite de capacité, ou l'ajout d'une passerelle supplémentaire, lorsque le premier réseau est en limite de capacité.

Encore un autre inconvénient de la technique actuelle précitée est que la passerelle constitue un point d'accès localisé (physiquement). Ceci est une contrainte puisque cela signifie que les terminaux doivent être connectés, via le second réseau, à une passerelle se trouvant à un endroit particulier.

Un autre inconvénient de la technique actuelle précitée est que la passerelle constitue un point d'accès centralisé, qui constitue un goulot d'étranglement en terme de communication entre les premier et au moins un second réseaux. La technique actuelle ne présente donc pas une bonne résistance aux pannes de la passerelle, ni aux pannes du premier ou second réseau.

### 3. Objectifs de l'invention

L'invention a notamment pour objectif de pallier ces différents inconvénients de l'état de la technique.

Plus précisément, l'un des objectifs de la présente invention, dans au moins un mode de réalisation, est de fournir une technique permettant d'ouvrir un premier réseau de communication par courant porteur vers au moins un second réseau de communication, cette technique étant simple à mettre en oeuvre et peu coûteuse.

L'invention a également pour objectif, dans au moins un mode de réalisation, de fournir une telle technique ne nécessitant aucun équipement spécifique de passerelle.

Un autre objectif de l'invention, dans au moins un mode de réalisation, est de fournir une telle technique qui ne nécessite aucun redimensionnement en cas de connexion d'un nouveau noeud au premier réseau de communication par courant porteur.

Un objectif complémentaire de l'invention, dans au moins un mode de réalisation, est de fournir une telle technique ne présentant pas un point d'accès localisé et centralisé pour accéder au premier réseau de communication par courant porteur.

### 4. Résumé de l'invention

Ces différents objectifs, ainsi que d'autres qui apparaîtront par la suite, sont atteints selon l'invention à l'aide d'un système de communication comprenant un premier réseau de communication par courant porteur via lequel peuvent communiquer entre eux une pluralité de noeuds, chaque noeud comprenant :
- des premiers moyens d'interface de communication, permettant d'interfacer le noeud avec le premier réseau de communication et mettant en oeuvre un premier protocole de communication par courant porteur, et
- des moyens de contrôle d'au moins un équipement connecté au noeud.

Selon l'invention, au moins un des noeuds, dit noeud-passerelle, comprend en outre :
- des seconds moyens d'interface de communication, permettant d'interfacer le noeud-passerelle avec au moins un second réseau de communication et mettant en oeuvre un second protocole de communication, et
- au moins un moyen de fourniture de services, permettant de fournir au moins un service à un terminal relié au noeud-passerelle via ledit au moins un second réseau de communication et lesdits seconds moyens d'interface.

Le principe général de l'invention consiste donc à incorporer dans au moins un noeud d'une part les fonctionnalités d'une passerelle (seconds moyens d'interface) et d'autre part les moyens de fournitures de services.

Ainsi, l'invention repose sur une approche tout à fait nouvelle et inventive de l'ouverture d'un premier réseau de communication par courant porteur vers au moins un second réseau de communication. Cette approche va à l'encontre des préjugés de l'homme du métier selon lesquels les noeuds et les passerelles sont deux types d'équipements distincts, que rien n'incite à combiner.

L'invention permet à un terminal (ordinateur, assistant personnel (PDA), téléphone portable...) de se connecter directement à un noeud-passerelle (et donc indirectement à l'ensemble des noeuds), sans passer par un équipement spécifique de passerelle.

En outre, l'invention permet d'ajouter autant de noeuds-passerelles que l'utilisateur le souhaite, sans nécessiter le redimensionnement d'un quelconque appareil.

L'invention permet aussi de minimiser le coût du système, notamment du fait que le noeud-passerelle peut comprendre un unique processeur, qui remplace le processeur compris dans un noeud classique et celui compris dans une passerelle classique.

Préférentiellement, le système comprend au moins deux noeuds-passerelles.

Dans un mode de réalisation particulier, on peut même prévoir que tous les noeuds soient des noeuds-passerelles.

De la pluralité de noeuds-passerelles découlent plusieurs avantages.

Tout d'abord, on dispose ainsi, pour les terminaux, de plusieurs points d'accès au premier réseau de communication par courant porteur. Ces différents points d'accès peuvent être localisés à différents endroits. En outre, ceci permet d'offrir une bonne résistance aux pannes : si l'un des noeuds-passerelles tombe en panne, il est fort probable qu'un terminal pourra accéder au premier réseau via un autre noeud-passerelle.

Par ailleurs, si le nombre de noeuds-passerelles est suffisamment grand, on obtient une redondance suffisamment grande entre les premier et second réseaux de communication pour offrir une bonne résistance aux pannes du premier et/ou du second réseau.

Enfin, la fabrication du noeud-passerelle en grande quantité permet de réduire son coût unitaire. Ainsi, le coût de fabrication de N noeuds-passerelles selon l'invention devient moins élevé que le coût de fabrication de N-1 noeuds classiques et une passerelle classique.

De façon avantageuse, ledit au moins un service appartient au groupe comprenant : un service de configuration des noeuds, un service de gestion du premier réseau de communication par courant porteur, un service d'accès à des données stockées dans les noeuds, un service d'archivage de données dans les noeuds et un service de synchronisation des noeuds. Cette liste n'est pas exhaustive.

De façon préférentielle, chaque noeud-passerelle comprend au moins un moyen de fourniture de services, permettant de fournir au moins les services suivants : un service de configuration des noeuds, un service de configuration du premier réseau de communication par courant porteur et un service d'accès à des données stockées dans les noeuds.

Avantageusement, les seconds moyens d'interface de communication appartiennent au groupe comprenant : des moyens d'interface de type Ethernet, des moyens d'interface de type modem, des moyens d'interface de type infrarouge, des moyens d'interface de type radiofréquence et des moyens d'interface de type courant porteur. Cette liste n'est pas exhaustive.

De façon avantageuse, ledit au moins un moyen de fourniture de services appartiennent au groupe comprenant : des serveurs Web, des services Web, des serveurs OPC et des gestionnaires de messages. Cette liste n'est pas exhaustive.

Ainsi, les services sont offerts grâce à un ou plusieurs moyens bien connus en eux-mêmes et banalisés. Par conséquent, il suffit que le terminal (équipement de l'utilisateur connecté au noeud-passerelle via le second réseau) implémente l'outil logiciel associé à ce ou ces moyens (par exemple un navigateur Web si le noeud-passerelle intègre un serveur Web ou des services Web). Le système d'exploitation implémenté sur le terminal n'a aucune importance.

Selon une caractéristique avantageuse, un même moyen de fourniture de services fournit au moins deux services.

Ainsi, on optimise la réalisation de chaque noeud-passerelle.

Dans un premier mode de réalisation particulier de l'invention, ledit premier réseau de communication et ledit au moins un second réseau de communication sont confondus et utilisent un même médium physique.

Dans ce premier mode de réalisation, chaque réseau met en oeuvre un protocole de communication distinct (par exemple CPL bas débit pour le premier réseau et CPL haut débit pour le second réseau).

Dans un second mode de réalisation particulier de l'invention, ledit premier réseau de communication et ledit au moins un second réseau de communication ne sont pas confondus et utilisent des médias physiques distincts.

Avantageusement, dans le cas où chaque noeud comprend des moyens de stockage de données, et où les premiers moyens d'interface de communication comprennent des premiers moyens de lecture des données stockées dans lesdits moyens de stockage de données, alors les seconds moyens d'interface de communication comprennent des seconds moyens de lecture des données stockées dans lesdits moyens de stockage de données.

De cette façon, un terminal peut accéder directement aux données d'un noeud-passerelle, uniquement via le second réseau et donc sans passer par le premier réseau de communication par courant porteur. On notera que ceci est impossible avec la technique de l'art antérieur précitée, dans laquelle le terminal communique avec la passerelle via le second réseau et la passerelle communique avec le noeud via le premier réseau. L'invention permet donc de limiter les temps de traitement pour accéder à des données, ainsi que les risques d'erreur.

De façon avantageuse, chaque noeud-passerelle comprend des moyens d'accès à des données stockées dans un autre noeud-passerelle, les moyens d'accès comprenant eux-mêmes des moyens de sélection des premiers ou seconds moyens d'interface de communication.

Ainsi, on choisit le meilleur chemin entre le noeud-passerelle donné et un autre noeud-passerelle (chaque chemin appartenant à l'un des premier et second réseaux).

L'invention concerne également un noeud du type compris dans un système de communication comprenant un premier réseau de communication par courant porteur via lequel peuvent communiquer entre eux une pluralité de noeuds, le noeud comprenant :
- des premiers moyens d'interface de communication, permettant d'interfacer le noeud avec le premier réseau de communication et mettant en oeuvre un premier protocole de communication par courant porteur, et
- des moyens de contrôle d'au moins un équipement connecté au noeud.

Selon l'invention, le noeud comprend en outre :
- des seconds moyens d'interface de communication, permettant d'interfacer le noeud, dit noeud-passerelle, avec au moins un second réseau de communication et mettant en oeuvre un second protocole de communication, etau moins un moyen de fourniture de services, permettant de fournir au moins un service à un terminal relié au noeud-passerelle via ledit au moins un second réseau de communication et lesdits seconds moyens d'interface.

### 5. Liste des figures

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :
- la figure 1 présente un synoptique d'un mode de réalisation particulier du système selon l'invention ;
- la figure 2 présente un schéma bloc de l'architecture matérielle d'un mode de réalisation particulier du noeud-passerelle selon l'invention ; et
- la figure 3 présente un schéma bloc de l'architecture logicielle d'un mode de réalisation particulier du noeud-passerelle selon l'invention.

### 6. Description détaillée

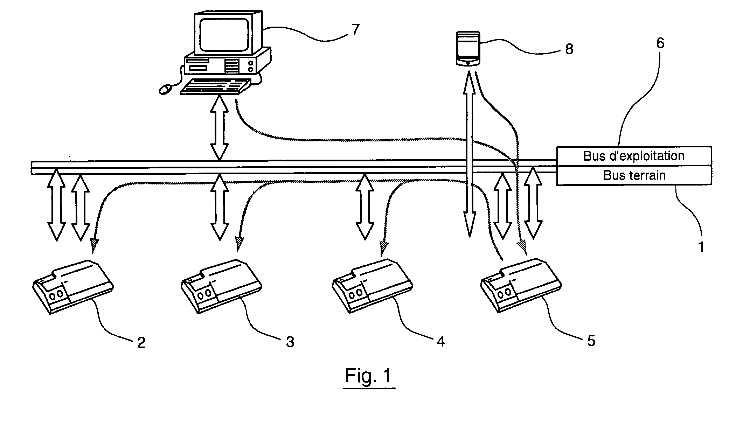

Comme illustré sur la **figure 1**, l'invention concerne donc un système de communication comprenant un premier réseau de communication par courant porteur (référencé 1) relié à au moins un second réseau de communication (référencé 6).

De façon classique, le premier réseau de communication par courant porteur 1 est par exemple un bus de terrain auquel sont connectés une pluralité de noeuds, référencés 2 à 5. Chaque noeud comprend des premiers moyens d'interface de communication, permettant d'interfacer le noeud avec le premier réseau de communication 1 et mettant en oeuvre un premier protocole de communication par courant porteur (la communication entre noeuds utilise par exemple le protocole LonTalk ou TCP/IP). Chaque noeud comprend également des moyens de contrôle d'au moins un équipement (non représenté) connecté à ce noeud.

Selon l'invention, au moins un des noeuds 2 à 5 est un noeud-passerelle. Dans la suite de la description, on considère à titre d'exemple que les noeuds référencés 2 et 5 sont des noeuds-passerelles (et donc que les noeuds référencés 3 et 4 sont des noeuds classiques). Il est clair cependant que l'invention s'applique également dans le cas où il n'y a qu'un seul noeud-passerelle ou dans le cas où tous les noeuds sont des noeuds passerelles.

Chaque noeud-passerelle 2, 5 comprend, outre les moyens précités compris dans chaque noeud, des seconds moyens d'interface de communication, permettant d'interfacer le noeud-passerelle avec le second réseau de communication 6 (par exemple un bus d'exploitation) et mettant en oeuvre un second protocole de communication (par exemple le protocole TCP/IP ou IrDA). Ces seconds moyens d'interface de communication implémentent par exemple des interfaces de communication standards telles que Ethernet, Modem (RTC, ADSL, GPRS...), Infrarouge, Radiofréquence et courant porteur (haut débit).

Les premier et second réseaux (bus de terrain et bus d'exploitation) 1 et 6 peuvent être confondus et utiliser le même médium physique (courant porteur bas débit pour le premier et haut débit pour le second). Selon une alternative, ils sont dissociés (par exemple courant porteur pour le premier et Ethernet pour le second). Il en résulte l'avantage de pouvoir utilisé le médium le plus adapté en fonction de la topologie des bus à réaliser.

Chaque noeud-passerelle 2, 5 comprend également des moyens de fourniture de services à un terminal relié au noeud-passerelle 2, 5 via le second réseau de communication 6 et les seconds moyens d'interface.

Tout type de terminal peut être envisagé : ordinateur fixe ou portable 7, assistant personnel (PDA) 8, téléphone portable (non représenté)...

Les moyens de fourniture de services comprennent par exemple un ou plusieurs des logiciels standards suivants : serveurs Web, services Web, serveurs OPC et gestionnaires de messages (courriers électroniques (email), messages courts (SMS) ou autres).

Les services proposés (aussi appelés fonctions) sont par exemple les suivants :
- un service de configuration des noeuds ;
- un service de gestion du premier réseau de communication par courant porteur ;
- un service d'accès à des données stockées dans les noeuds ;
- un service d'archivage de données dans les noeuds ;
- un service de synchronisation des noeuds ;
- etc.

On discute maintenant plus en détail des exemples d'implémentation des trois premières fonctions précitées (configuration des noeuds, gestion du premier réseau et accès aux données).

La fonction de configuration des noeuds est par exemple remplie par l'intermédiaire d'un serveur Web intégré ou de services Web. Il n'est alors nécessaire pour l'utilisateur que de disposer d'un navigateur Internet quelconque, implémenté sur un terminal quelconque (ordinateur portable, PDA, téléphone portable...). Le système d'exploitation implémenté sur le terminal de l'utilisateur n'a aucune importance, il peut être du type Windows (marque déposée), PalmOS (marque déposée),Unix (marque déposée) ou Linux (marque déposée). Le support physique de connexion peut être au choix Ethernet, l'Infrarouge, la radiofréquence ou encore le courant-porteur haut-débit (CPL). Lors de l'ajout de fonctions supplémentaires par extension du réseau, les nouveaux noeuds sont détectés automatiquement et ne nécessitent pas la reconfiguration complète du réseau. L'outil standard permettant la configuration des noeuds est le serveur Web intégré dans le noeud servant à la configuration. Pour le développement d'applications spécifiques de configuration, les développeurs utiliseront les services Web.

La fonction de gestion du réseau et de configuration des services proposés est par exemple également remplie par l'intermédiaire du serveur Web intégré ou des services Web précités. Elle permet l'ajout ou le retrait de noeuds sur le réseau.

La fonction d'accès aux données des noeuds est par exemple aussi remplie par l'intermédiaire du serveur Web intégré précité, associé à un moteur CGI (« Common Gateway Interface » en anglais), dans un but de consultation des données par un utilisateur. Dans le cas de l'utilisation de ces données par un équipement ou logiciel tiers, l'interface standard OPC intégrée ou les services Web seront utilisés.

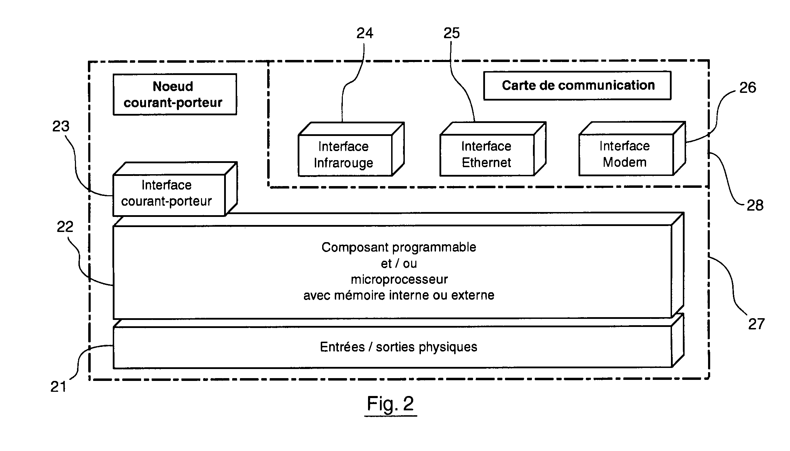

On présente maintenant, en relation avec la **figure 2**, l'architecture matérielle d'un mode de réalisation particulier du noeud-passerelle selon l'invention.

Comme pour un noeud classique, l'architecture matérielle comprend par exemple une première carte électronique 27 (« carte noeud courant-porteur ») comprenant :
- une interface 21 vers les entrées/sorties physique ;
- un composant programmable (microcontrôleur ou microprocesseur) 22 assurant la gestion des entrées/sorties et les fonctions de communication ;
- une mémoire non volatile (non représentée) pour assurer les fonctions d'archivage ;
- une alimentation en énergie externe (non représentée) ;
- une alimentation en énergie de secours (pile ou batterie) (non représentée) ;
- une horloge temps réel (non représentée).

Selon l'invention, l'architecture matérielle comprend par exemple une seconde carte électronique 28 (« carte de communication ») comprenant des interfaces de communication de type courant porteur 23, infrarouge 24, Ethernet 25 et modem 26.

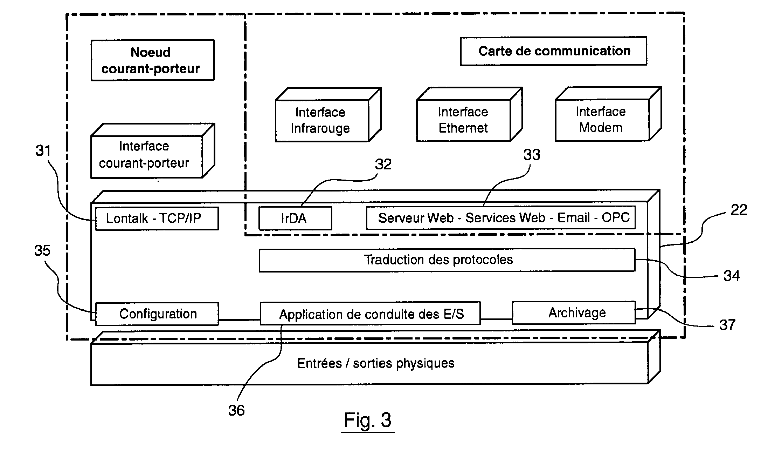

On présente maintenant, en relation avec la **figure 3**, l'architecture logicielle d'un mode de réalisation particulier du noeud-passerelle selon l'invention.

Au sein du composant programmable (microcontrôleur ou microprocesseur) 22, qui assure le fonctionnement du coeur du système, l'architecture logicielle comprend :
- un module 31 implémentant les protocoles LonTalk et TCP/IP ;
- un module 32 implémentant le protocole IrDA ;
- un module 33 implémentant un serveur Web et/ou des services Web et/ou un gestionnaire de messages (Email, SMS...) et/ou un serveur OPC ;
- un module 34 de traduction de protocoles (fonctions de passerelle entre les différents protocoles) ;
- un module 36 d'application de conduite des entrées/sorties ;
- un module 37 d'archivage.

## Revendications

1. Système de communication comprenant un premier réseau de communication par courant porteur (1) via lequel peuvent communiquer entre eux une pluralité de noeuds (2 à 5), chaque noeud comprenant :
- des premiers moyens (23) d'interface de communication, permettant d'interfacer le noeud avec le premier réseau de communication et mettant en oeuvre un premier protocole de communication par courant porteur, et
- des moyens (22) de contrôle d'au moins un équipement connecté au noeud, **caractérisé en ce qu'**au moins un des noeuds, dit noeud-passerelle (2, 5), comprend en outre :
- des seconds moyens (23 à 26) d'interface de communication, permettant d'interfacer le noeud-passerelle avec au moins un second réseau de communication (6) et mettant en oeuvre un second protocole de communication, et
- au moins un moyen (22) de fourniture de services, permettant de fournir au moins un service à un terminal (7, 8) relié au noeud-passerelle via ledit au moins un second réseau de communication et lesdits seconds moyens d'interface.

2. Système selon la revendication 1, **caractérisé en ce qu'**il comprend au moins deux noeuds-passerelles (2, 5).

3. Système selon l'une quelconque des revendications 1 et 2, **caractérisé en ce que** ledit au moins un service appartient au groupe comprenant :
- un service de configuration des noeuds ;
- un service de gestion du premier réseau de communication par courant porteur ;
- un service d'accès à des données stockées dans les noeuds ;
- un service d'archivage de données dans les noeuds; et
- un service de synchronisation des noeuds.

4. Système selon l'une quelconque des revendications 1 et 2, **caractérisé en ce que** chaque noeud-passerelle comprend au moins un moyen de fourniture de services, permettant de fournir au moins les services suivants :
- un service de configuration des noeuds ;
- un service de configuration du premier réseau de communication par courant porteur ; et
- un service d'accès à des données stockées dans les noeuds.

5. Système selon l'une quelconque des revendications 1 à 4, **caractérisé en ce que** les seconds moyens d'interface de communication appartiennent au groupe comprenant :
- des moyens (25) d'interface de type Ethernet ;
- des moyens (26) d'interface de type modem ;
- des moyens (24) d'interface de type infrarouge ;
- des moyens d'interface de type radiofréquence ; et
- des moyens (23) d'interface de type courant porteur.

6. Système selon l'une quelconque des revendications 1 à 5, **caractérisé en ce que** ledit au moins un moyen de fourniture de services appartiennent au groupe comprenant :
- des serveurs Web ;
- des services Web ;
- des serveurs OPC ; et
- des gestionnaires de messages.

7. Système selon l'une quelconque des revendications 1 à 6, **caractérisé en ce qu'**un même moyen de fourniture de services fournit au moins deux services.

8. Système selon l'une quelconque des revendications 1 à 7, **caractérisé en ce que** ledit premier réseau de communication (1) et ledit au moins un second réseau de communication (6) sont confondus et utilisent un même médium physique.

9. Système selon l'une quelconque des revendications 1 à 7, **caractérisé en ce que** ledit premier réseau de communication (1) et ledit au moins un second réseau de communication (6) ne sont pas confondus et utilisent des médias physiques distincts.

10. Système selon l'une quelconque des revendications 1 à 9, chaque noeud comprenant des moyens de stockage de données, les premiers moyens d'interface de communication comprenant des premiers moyens de lecture des données stockées dans lesdits moyens de stockage de données, **caractérisé en ce que** les seconds moyens d'interface de communication comprennent des seconds moyens de lecture des données stockées dans lesdits moyens de stockage de données.

11. Système selon l'une quelconque des revendications 2 à 10, **caractérisé en ce que** chaque noeud-passerelle comprend des moyens d'accès à des données stockées dans un autre noeud-passerelle, les moyens d'accès comprenant eux-mêmes des moyens de sélection des premiers ou seconds moyens d'interface de communication.

12. Noeud (2, 5) du type compris dans un système de communication comprenant un premier réseau de communication par courant porteur (1) via lequel peuvent communiquer entre eux une pluralité de noeuds (2 à 5), le noeud comprenant :
- des premiers moyens (23) d'interface de communication, permettant d'interfacer le noeud avec le premier réseau de communication et mettant en oeuvre un premier protocole de communication par courant porteur, et
- des moyens (22) de contrôle d'au moins un équipement connecté au noeud, **caractérisé en ce qu'**il comprend en outre :
- des seconds moyens (23 à 26) d'interface de communication, permettant d'interfacer le noeud, dit noeud-passerelle, avec au moins un second réseau de communication (6) et mettant en oeuvre un second protocole de communication, et
- au moins un moyen (22) de fourniture de services, permettant de fournir au moins un service à un terminal (7, 8) relié au noeud-passerelle via ledit au moins un second réseau de communication et lesdits seconds moyens d'interface.

## Claims

1. Communication system comprising a first communication network by carrier current (1), via which multiple nodes (2 to 5) can communicate with each other, each node comprising:
- first communication interface means (23), making it possible to interface the node with the first communication network, and implementing a first communication protocol by carrier current, and
- means (22) of controlling at least one item of equipment connected to the node,
**characterized in that** at least one of the nodes, called a gateway node (2, 5) also comprises:
- second interface communication means (23 to 26), making it possible to interface the gateway node with at least one second communication network (6), and implementing a second communication protocol, and
- at least one means (22) of supplying services, making it possible to supply at least one service to a terminal (7, 8) which is connected to the gateway node via the said at least one second communication network and the said second interface means.

2. System according to Claim 1, **characterized in that** it includes at least two gateway nodes (2, 5).

3. System according to any one of Claims 1 and 2, **characterized in that** the said at least one service belongs to the group comprising:
- a node configuration service;
- a service for managing the first communication network by carrier current;
- a service for access to data stored in the nodes;
- a service for archiving data stored in the nodes; and
- a node synchronisation service.

4. System according to any one of Claims 1 and 2, **characterized in that** each gateway node includes at least one means of supplying services, making it possible to supply at least the following services:
- a node configuration service;
- a service for managing the first communication network by carrier current; and
- a service for access to data stored in the nodes.

5. System according to any one of Claims 1 to 4, **characterized in that** the second communication interface means belong to the group comprising:
- interface means (25) of Ethernet type;
- interface means (26) of modem type;
- interface means (24) of infrared type;
- interface means of radio frequency type; and
- interface means (23) of carrier current type.

6. System according to any one of Claims 1 to 5, **characterized in that** the said at least one means of supplying services belongs to the group comprising:
- Web servers;
- Web services;
- OPC servers; and
- message handlers.

7. System according to any one of Claims 1 to 6, **characterized in that** a single means of supplying services supplies at least two services.

8. System according to any one of Claims 1 to 7, **characterized in that** the said first communication network (1) and the said at least one second communication network (6) are combined, and use the same physical medium.

9. System according to any one of Claims 1 to 7, **characterized in that** the said first communication network (1) and the said at least one second communication network (6) are not combined, and use distinct physical media.

10. System according to any one of Claims 1 to 9, each node comprising means of storing data, the first communication interface means including the first means of reading the data stored in the said data storage means, **characterized in that** the second communication interface means comprise second means of reading the data stored in the said data storage means.

11. System according to any one of Claims 2 to 10, **characterized in that** each gateway node includes means of access to data stored in another gateway node, the access means themselves including means of selecting the first or second communication interface means.

12. Node (2, 5) of the type which is included in a communication system comprising a first communication network by carrier current (1), via which multiple nodes (2 to 5) can communicate with each other, the node comprising:
- first communication interface means (23), making it possible to interface the node with the first communication network, and implementing a first communication protocol by carrier current, and
- means (22) of controlling at least one item of equipment connected to the node,
**characterized in that** it also comprises:
- second interface communication means (23 to 26), making it possible to interface the node, called a gateway node, with at least one second communication network (6), and implementing a second communication protocol, and
- at least one means (22) of supplying services, making it possible to supply at least one service to a terminal (7, 8) which is connected to the gateway node via the said at least one second communication network and the said second interface means.

## Patentansprüche

1. Kommunikationssystem, umfassend ein erstes Trägerfrequenz-Kommunikationsnetz (1), über welches eine Vielzahl an Knoten (2 bis 5) miteinander kommunizieren können, wobei jeder Knoten Folgendes umfasst:
- erste Kommunikationsschnittstellenmittel (23), die das Verbinden eines ersten Knotens mit dem ersten Kommunikationsnetz ermöglichen und ein erstes Trägerfrequenz-Kommunikationsprotokoll verwenden, und
- Mittel (22) zum Steuern von zumindest einer mit dem Knoten verbundenen Einrichtung,
**dadurch gekennzeichnet, dass** mindestens einer der Knoten, als Gateway-Knoten (2, 5) bezeichnet, ferner Folgendes umfasst:
- zweite Kommunikationsschnittstellenmittel (23 bis 26), die das Verbinden des Gateway-Knotens mit mindestens einem zweiten Kommunikationsnetz (6) ermöglichen und ein zweites Kommunikationsprotokoll verwenden, und
- mindestens ein Dienstleistungsmittel (22), das es ermöglicht, mindestens einen Dienst an einer Endstelle (7, 8), die über das mindestens eine zweite Kommunikationsnetz und die zweiten Schnittstellenmittel mit dem Gateway-Knoten verbunden ist, zu erbringen.

2. System nach Anspruch 1, **dadurch gekennzeichnet, dass** es mindestens zwei Gateway-Knoten (2, 5) umfasst.

3. System nach einem der Ansprüche 1 oder 2, **dadurch gekennzeichnet, dass** der mindestens eine Dienst zur Gruppe gehört, die Folgendes umfasst:
- einen Dienst zur Konfiguration der Knoten;
- einen Dienst zur Verwaltung des ersten Trägerfrequenz-Kommunikationsnetzes;
- einen Dienst zum Zugriff auf in den Knoten gespeicherte Daten;
- einen Dienst zur Archivierung von Daten in den Knoten; und
- einen Dienst zur Synchronisierung der Knoten.

4. System nach einem der Ansprüche 1 oder 2, **dadurch gekennzeichnet, dass** jeder Gateway-Knoten mindestens ein Dienstleistungsmittel umfasst, das es ermöglicht, mindestens die folgenden Dienste zu erbringen:
- einen Dienst zur Konfiguration der Knoten;
- einen Dienst zur Konfiguration des ersten Trägerfrequenz-Kommunikationsnetzes; und
- einen Dienst zum Zugriff auf in den Knoten gespeicherte Daten.

5. System nach einem der Ansprüche 1 bis 4, **dadurch gekennzeichnet, dass** die zweiten Kommunikationsschnittstellenmittel zur Gruppe gehören, die Folgendes umfasst:
- Schnittstellenmittel (25) vom Typ Ethernet;
- Schnittstellenmittel (26) vom Typ Modem;
- Schnittstellenmittel (24) vom Typ Infrarot;
- Schnittstellenmittel vom Typ Hochfrequenz; und
- Schnittstellenmittel (23) vom Typ Trägerfrequenz.

6. System nach einem der Ansprüche 1 bis 5, **dadurch gekennzeichnet, dass** das mindestens eine Dienstleistungsmittel zur Gruppe gehört, die Folgendes umfasst:
- Webserver;
- Webdienste;
- OPC-Server; und
- Nachrichtenverwalter.

7. System nach einem der Ansprüche 1 bis 6, **dadurch gekennzeichnet, dass** ein und dasselbe Dienstleistungsmittel mindestens zwei Dienste erbringt.

8. System nach einem der Ansprüche 1 bis 7, **dadurch gekennzeichnet, dass** das erste Kommunikationsnetz (1) und das mindestens eine zweite Kommunikationsnetz (6) vereinigt sind und das gleiche physische Medium verwenden.

9. System nach einem der Ansprüche 1 bis 7, **dadurch gekennzeichnet, dass** das erste Kommunikationsnetz (1) und das mindestens eine zweite Kommunikationsnetz (6) nicht vereinigt sind und andere physische Medien verwenden.

10. System nach einem der Ansprüche 1 bis 9, wobei jeder Knoten Mittel zum Speichern von Daten umfasst, wobei die ersten Kommunikationsschnittstellenmittel erste Mittel zum Lesen der Daten, die in den Mitteln zum Speichern von Daten gespeichert sind, umfassen, **dadurch gekennzeichnet, dass** die zweiten Kommunikationsschnittstellenmittel zweite Mittel zum Lesen der Daten, die in den Mitteln zum Speichern von Daten gespeichert sind, umfassen.

11. System nach einem der Ansprüche 2 bis 10, **dadurch gekennzeichnet, dass** jeder Gateway-Knoten Mittel zum Zugriff auf Daten, die in einem anderen Gateway-Knoten gespeichert sind, umfasst, wobei die Mittel zum Zugriff selbst Mittel zur Auswahl der ersten oder der zweiten Kommunikationsschnittstellenmittel umfassen.

12. Knoten (2, 5) von jenem Typ, der in einem Kommunikationssystem enthalten ist, welches ein erstes Trägerfrequenz-Kommunikationsnetz (1) umfasst, über das eine Vielzahl an Knoten (2 bis 5) miteinander kommunizieren können, wobei der Knoten Folgendes umfasst:
- erste Kommunikationsschnittstellenmittel (23), die das Verbinden eines ersten Knotens mit dem ersten Kommunikationsnetz ermöglichen und ein erstes Trägerfrequenz-Kommunikationsprotokoll verwenden, und
- Mittel (22) zum Steuern von zumindest einer mit dem Knoten verbundenen Einrichtung,
**dadurch gekennzeichnet, dass** er ferner Folgendes umfasst:
- zweite Kommunikationsschnittstellenmittel (23 bis 26), die das Verbinden des Knotens, als Gateway-Knoten bezeichnet, mit mindestens einem zweiten Kommunikationsnetz (6) ermöglichen und ein zweites Kommunikationsprotokoll verwenden, und
- mindestens ein Dienstleistungsmittel (22), das es ermöglicht, mindestens einen Dienst an einer Endstelle (7, 8), die über das mindestens eine zweite Kommunikationsnetz und die zweiten Schnittstellenmittel mit dem Gateway-Knoten verbunden ist, zu erbringen.
